# EUROPÄISCHE PATENTSCHRIFT

(11) **EP 1 902 932 B1**
(45) Veröffentlichungstag und Bekanntmachung des Hinweises auf die Patenterteilung: **06.03.2013**
(21) Anmeldenummer: 07116976.7
(22) Anmeldetag: 21.09.2007
(51) Int. Cl.: B62D 55/21

(54) **Steckmodul für eine endlose Gleiskette, eine endlose Gleiskette und ein Verfahren zum Montieren**
Cartridge for an endless crawler, an endless crawler and method for mounting
Module enfichable pour une chenille sans fin, chenille sans fin et son procédé de montage

(30) Priorität: 22.09.2006 US 525367
(43) Veröffentlichungstag der Anmeldung: 26.03.2008
(73) Patentinhaber: Deere & Company, Moline, IL 61265-8098 (US)
(72) Erfinder: Mulligan, Patrick J, Dubuque, IA 52002 (US); Bihl, Daniel, Dubuque, IA 52001 (US); Schrauben, Kevin D, Bellevue, IA 52031 (US); Wodrich Timothy D, Peosta IA Iowa 52068 (US)
(74) Vertreter: John Deere GmbH & Co. KG

(56) Entgegenhaltungen:
- EP-A- 1 391 371
- WO-A-81/00545
- US-A- 4 251 182
- US-A1- 2003 219 181
- US-A1- 2004 114 993

## Beschreibung

Die vorliegende Erfindung betrifft eine endlose Gleiskette als solche und ein Steckmodul zum Verbinden der Glieder endloser Gleisketten.

Endlose Gleisketten werden für Fahrzeuge des Gleistyps benutzt, und sind im Stand der Technik allgemein bekannt. Endlose Gleisketten dieser Art weisen eine Anzahl von Gliedern und Steckmodulen auf, welche die Glieder derart verbinden, dass sie relativ zueinander drehbar sind. Solche bekannten endlosen Gleisketten und bekannte Verfahren zum Montieren dieser endlosen Gleisketten stehen häufig im Zusammenhang mit Dichtungsproblemen.

Eine derartige Gleiskette ist beispielsweise in US 2004/0114993 A1 offenbart. Nachteilig wirkt sich hierbei aus, dass eine korrekte Positionierung der Einzelteile sich im Zusammenbau als schwierig gestaltet..

Eine Aufgabe der Erfindung ist es deshalb, das genannte Problem zu beheben.

Die oben beschriebene Aufgabe wird durch die Lehren der Ansprüche 1 und 7 gelöst. Weitere vorteilhafte Ausführungsformen der Erfindung sind in den untergeordneten Ansprüchen beschrieben.

Gemäß der Erfindung steht eine endlose Gleiskette als solche in Zusammenhang mit einem Steckmodul, das als eine Verbindung zwischen Gliedern der endlosen Gleiskette benutzt wird, derart, dass die Glieder relativ zueinander drehbar sind. Das Steckmodul ist dazu ausgelegt, vor dem Befestigen des Steckmoduls an den Gliedern montiert zu werden, und die Effektivität von Dichtungen der Verbindung zu fördern. Ein zugehöriges Verfahren ist offenbart. Zur Veranschaulichung umfasst das Steckmodul einen Bolzen, eine Buchse, eine erste und zweite Dichtung, und eine erste und zweite Hülse. Der Bolzen wird in der Buchse aufgenommen, derart, dass der Bolzen und die Buchse relativ zueinander drehbar sind. Ein Paar erste Glieder ist an gegenüberliegenden Enden der Buchse an der Buchse fixiert. Die erste und zweite Hülse nehmen den Bolzen an jeweils gegenüberliegenden Enden desselben auf jeder der beiden Seiten der Buchse auf, um jeweils die erste und zweite Dichtung zwischen den Hülsen und der Buchse zu erfassen. Die Hülsen sind an dem Bolzen und einem Paar zweite Glieder fixiert, sind jedoch gesondert von dem Bolzen und den zweiten Gliedern vorgesehen, um die Montage des Steckmoduls vor dem Befestigen des Steckmoduls an den Gliedern zu unterstützen. Eine solche Vormontage des Steckmoduls fördert die Festigkeit der Dichtungen. '

Die genannten sowie weitere Merkmale werden anhand der nachfolgenden Beschreibung und den beiliegenden Figuren deutlich.

Die detaillierte Beschreibung der Zeichnungen betrifft die begleitenden Figuren, wobei:
Fig. 1 eine Seitenansicht eines Fahrzeugs des Gleistyps ist;
Fig. 2 eine Schnittansicht entlang der Linie 2-2 aus Fig. 1 ist, die ein Steckmodul gemäß dem Stand der Technik zeigt, das als eine Verbindung zwischen einer Anzahl von Gliedern einer Gleiskette dient; und
Fig. 3 eine Schnittansicht ist, die ein erfindungsgemäßes Steckmodul zeigt, das anstelle des Steckmoduls aus Fig. 2 benutzt werden kann.

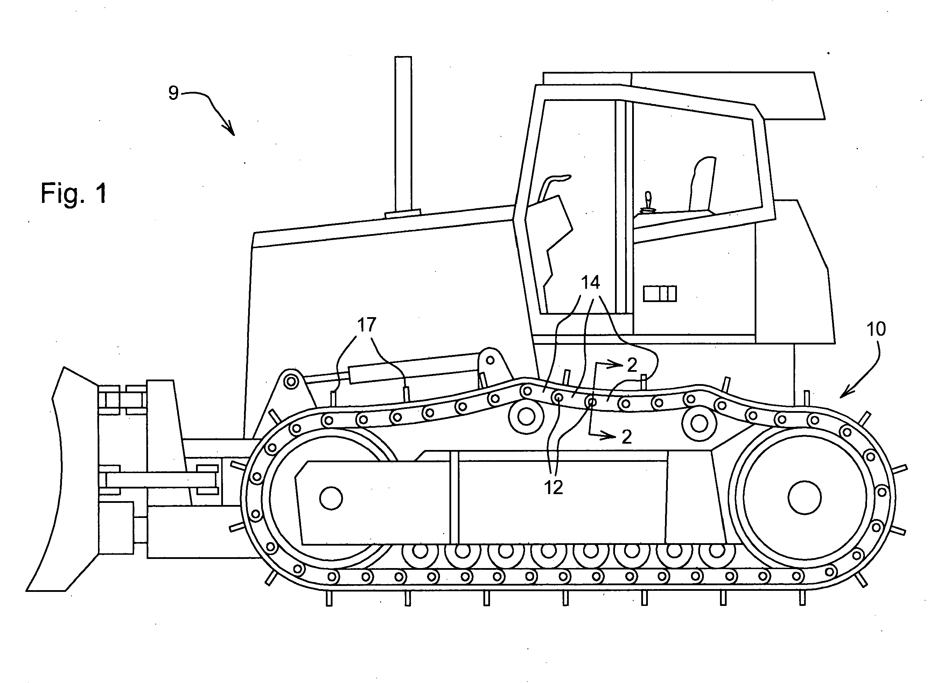

Bezugnehmend auf Fig. 1 zeigt diese ein Fahrzeug 9 des Gleistyps, das eine endlose Gleiskette 10, 110 zum Antreiben des Fahrzeugs 9 aufweist. Bei dem Fahrzeug 9 kann es sich um jeden beliebigen Typ eines Fahrzeugs mit einer Gleiskette 10, 110 handeln. Die Gleiskette 10, 110 weist mehrere Glieder 14 auf, an denen ein oder mehrere Triebelemente 17 zum Eingreifen mit einer Fläche befestigt sind, die unter dem Fahrzeug 9 angeordnet ist. Die Gleiskette 10, 110 weist ferner ein Steckmodul 12, 112 auf, das als eine Verbindung dient, die benachbarte Glieder 14 derart verbindet, dass sie bei Bewegung der Gleiskette 10, 110 um ihren geschlossenen Schleifenweg relativ zueinander drehbar sind. Das Steckmodul 12, 112 wird vor dem Anordnen an den Gliedern 14 ausgebildet. Nachdem das Steckmodul 12, 112 ausgebildet wurde, wird es an den Gliedern 14 angeordnet und befestigt. Eine solche Vormontage des Steckmoduls 12, 112 fördert die Festigkeit von Dichtungen 30, 30' in dem Steckmodul 12, 112, und damit die Lebensdauer des Steckmoduls 12, 112.

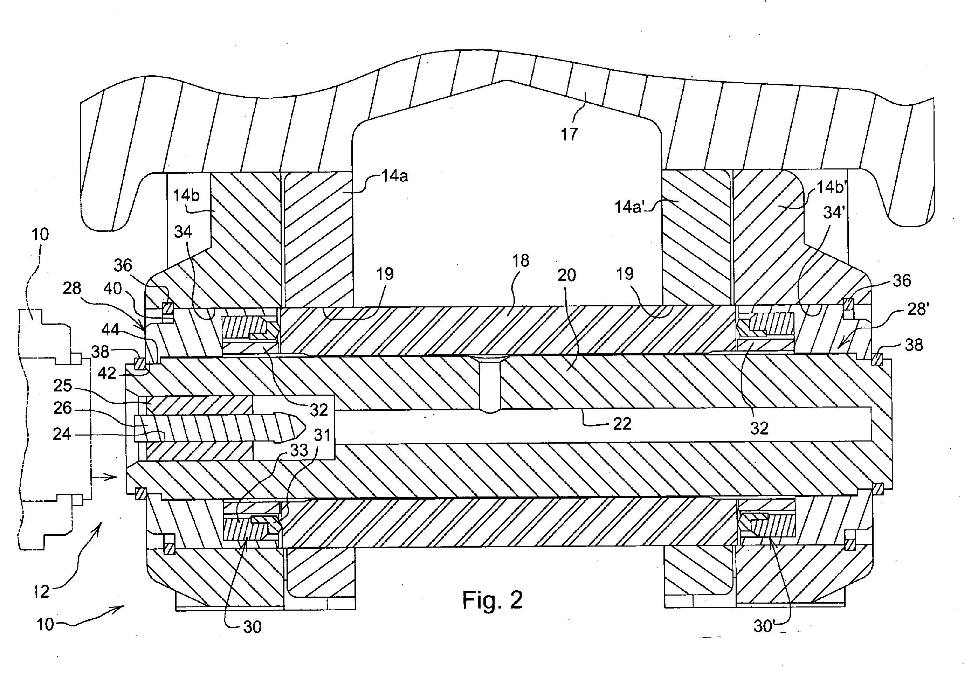

Bezug nehmend auf Fig. 2 zeigt diese eine Schnittansicht der endlosen Gleiskette 10 mit einem Steckmodul 12 gemäß dem Stand der Technik. An dem Steckmodul 12 sind ein Paar erste Glieder 14a, 14a' der Glieder 14, und ein Paar zweite Glieder 14b, 14b' der Glieder 14 befestigt. Das Steckmodul 12 dient als eine Verbindung, die die ersten Glieder 14a, 14a' und die zweiten Glieder 14b, 14b' derart miteinander verbindet, dass die ersten Glieder 14a, 14a' und die zweiten Glieder 14b, 14b' relativ zueinander drehbar sind.

Das Steckmodul 12 weist eine Buchse 18 auf, an der die ersten Glieder 14a, 14a' an gegenüberliegenden Enden der Buchse 18 fixiert sind. Als Beispiel ist die Buchse 18 in Presspassung in eine Bohrung 19 jedes ersten Gliedes 14a, 14a' eingepasst.

Ein Bolzen 20 ist in der Buchse 18 aufgenommen. Schmiermittel (z.B. Öl) aus einem Schmiermittelhohlraum 22, der in dem Bolzen 20 ausgebildet ist, schmiert die Kontaktfläche zwischen der Buchse 18 und dem Bolzen 20, um eine relative Drehung zwischen der Buchse 18 und dem Bolzen 20 zu ermöglichen. Das Schmiermittel kann über einen Kanal 24, der in einem kompressiblen Körper 25 ausgebildet ist, in den Hohlraum 22 eingespritzt werden, wenn ein Stopfen 26 entfernt wird, der normalerweise den Kanal 24 verschließt.

Das Steckmodul 12 weist ferner ein Paar Hülsen 28, 28' auf. Die Hülsen 28, 28' sind an gegenüberliegenden Enden des Bolzens 20 auf beiden Seiten der Buchse 18 angeordnet. Jede Hülse 28, 28' wirkt mit der Buchse 18 zusammen, um eine Dichtung 30, 30' dazwischen zu erfassen, die dazu ausgelegt ist, ein Austreten des Schmiermittels zu unterbinden, und eine Verunreinigung des Schmiermittels durch Eindringen von Schmutz zu unterbinden.

Zur Veranschaulichung weist die Dichtung 30, 30' ein Dichtungselement 31 (beispielsweise hergestellt aus Polyurethan) auf, das in Kontakt mit der Buchse 18 steht, und ein Dichtungsvorspannelement 33 (hergestellt beispielsweise aus Nitril), das das Dichtungselement 31 gegen die Buchse 18 vorspannt. Es versteht sich, dass die Dichtung 30, 30' in unterschiedlichster Weise konfiguriert sein kann, wobei die spezifische dargestellte Ausführungsform nur eine dieser Möglichkeiten darstellt. Ein Abstandsring 32 ist zwischen der Hülse 28, 28' und der Buchse 18 angeordnet, um die Hülse 28, 28' geringfügig von der Buchse 18 zu beabstanden, damit die Buchse 18 und die Hülse 28, 28' relativ zueinander drehbar sind.

Jede Hülse 28, 28' ist zwischen einem zweiten Glied 14b, 14b' und einem Ende des Bolzens 20 angeordnet und daran fixiert, derart, dass sie mit dem zweiten Glied 14b, 14b' und dem Bolzen 20 relativ zu der Buchse 18 und den ersten Gliedern 14a, 14a' drehbar ist. Die Hülse 28, 28' ist in einer Bohrung 34, 34' des zweiten Gliedes 14b, 14b' aufgenommen, derart, dass sich eine radial außen liegende Fläche der Hülse 28, 28' in Presspassung mit der Bohrung 34, 34' verbindet, und eine radial innen liegende Fläche der Hülse 28, 28' sich mit einer radial außen liegenden Fläche des Bolzens 20 verbindet, der in Presspassung in der Hülse 28, 28' eingepasst ist.

Halteringe 36, 38 an jedem Ende des Steckmoduls 12 dienen dazu, das Steckmodul 12 in Position zu halten. Der Haltering 36 dient als eine Kontaktfläche zwischen der Hülse 28, 28' und der Bohrung 34, 34'. Der Ring 36 ist in einer Nut 40 aufgenommen, die in der radial außen liegenden Fläche der Hülse 28, 28' ausgebildet ist. Der Haltering 38 dient als eine Kontaktfläche zwischen der Hülse 28, 28' und dem Bolzen 20. Ein Kranz 42 der Hülse 28, 28' erstreckt sich in eine Nut 44, die in dem Bolzen 20 ausgebildet ist, um gegen den Ring 38 und eine Schulter der Nut 44 zu wirken, um so das Halten der Bauteile des Steckmoduls 12 zu fördern.

Das Steckmodul 12 wird vor dem Anbringen des Steckmoduls 12 an den Gliedern 14a, 14a', 14b, 14b' ausgebildet. Während der Ausbildung des Steckmoduls 12 wird der Bolzen 20 in die Buchse 18 eingeführt, und die Abstandsringe 32 werden in die Enden der Buchse 18 eingeführt. Die Enden des Bolzens 20 werden derart in der Hülse 28, 28' eingeführt, dass der Kranz 42 in der Nut 44 aufgenommen wird, wodurch die Dichtung 30, 30' zwischen der Hülse 28, 28' und dem Ende der Buchse 18 erfasst wird. Der Haltering 38 wird installiert, um die Hülse 28, 28' in Position zu halten.

Nach dem Ausbilden des Steckmoduls 12 wird das Steckmodul 12 an den Gliedern 14a, 14a', 14b, 14b' angeordnet. Das Steckmodul 12 wird in die Bohrungen 19 der ersten Glieder 14a, 14a' und die Bohrungen 34, 34' der zweiten Glieder 14b, 14b' eingeführt, um eine Presspassung zwischen der Buchse 18 und den ersten Gliedern 14a, 14a' herzustellen, und eine Presspassung zwischen den Hülsen 28, 28' und den zweiten Gliedern 14b, 14b' herzustellen. Dann werden die Halteringe 36 installiert. Schmiermittel kann vor oder nach dem Anordnen des Steckmoduls 12 an den Gliedern 14a, 14a', 14b, 14b' in das Steckmodul 12 eingespritzt werden.

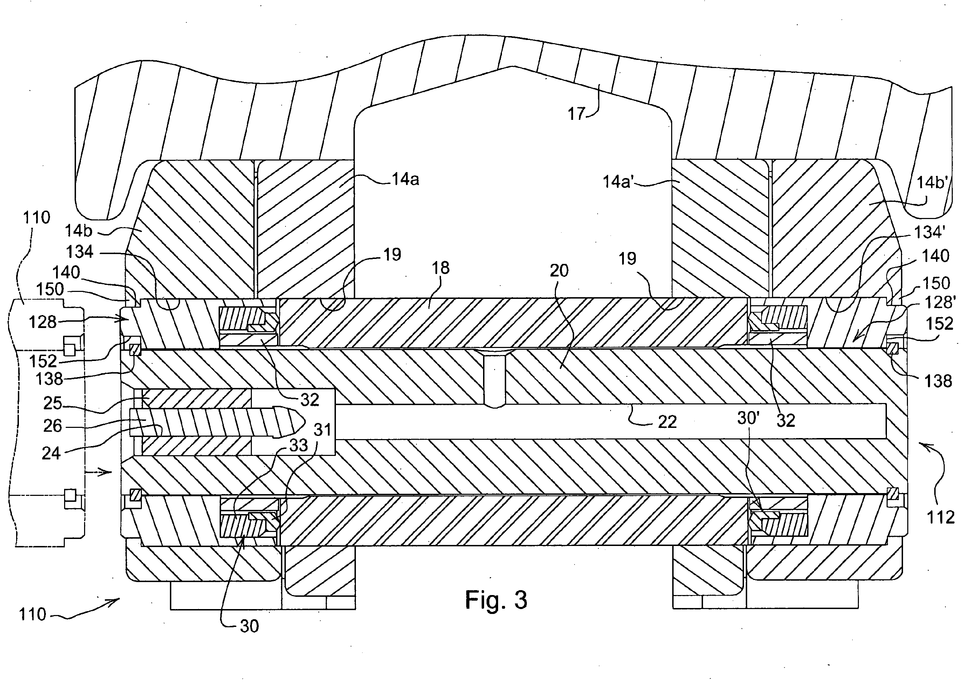

Bezugnehmend auf Fig. 3 kann eine endlose Gleiskette 110 anstelle der Gleiskette 10 (aus Fig. 2) an dem Fahrzeug 9 benutzt werden. Einige Bauteile der Gleiskette 110 gleichen denen der Gleiskette 10, weshalb identische Bezugszeichen ähnliche Bauteile bezeichnen. Die Hauptunterschiede werden im Folgenden erörtert.

Die Gleiskette 110 weist ein erfindungsgemäßes Steckmodul 112 auf, das als eine Verbindung dient, die das Paar erste Glieder 14a, 14a' und das Paar zweite Glieder 14b, 14b' verbindet. Das Steckmodul 112 wird vor dem Anordnen an den Gliedern 14a, 14a', 14b, 14b' ausgebildet. Nach dem Ausbilden des Steckmoduls 112 wird es an den Gliedern 14a, 14a', 14b, 14b' angeordnet und daran befestigt. Eine solche Vormontage des Steckmoduls 112 unterstützt die Festigkeit der Dichtungen 30, 30' in dem Steckmodul 112, und damit die Lebensdauer des Steckmoduls 112.

Das Steckmodul 112 weist eine Buchse 18 auf, die an den Gliedern 14a, 14a' fixiert ist, und den Bolzen 20 aufnimmt, um eine relative Drehung zwischen der Buchse 18 und dem Bolzen 20 zu ermöglichen. Schmiermittel, das über den Kanal 24 in den Hohlraum 22 eingespritzt wird, schmiert die Kontaktfläche zwischen der Buchse 18 und dem Bolzen 20.

Das Steckmodul 112 weist ein Paar Hülsen 128, 128' auf. Die Hülsen 128, 128' sind an gegenüberliegenden Enden des Bolzens 20 auf beiden Seiten der Buchse angeordnet. Jede Hülse 128, 128' wirkt mit der Buchse 18 zusammen, um eine Dichtung 30, 30' dazwischen zu erfassen, und ist durch einen Abstandsring 32 geringfügig von der Buchse 18 beabstandet, damit die Hülse 128, 128' und die Buchse 18 relativ zueinander drehbar sind.

Jede Hülse 128, 128' ist zwischen einem zweiten Glied 14b, 14b' und einem Ende des Bolzens 20 angeordnet und daran fixiert, derart, dass sie mit dem zweiten Glied 14b, 14b' und dem Bolzen 20 relativ zu der Buchse 18 und den ersten Gliedern 14a, 14a' drehbar ist. Die Hülse 128, 128' ist in der Bohrung 34, 34' des zweiten Glieds 14b, 14b' aufgenommen, derart, dass eine radial außen liegende Fläche der Hülse 128, 128' sich in Presseinpassung mit der Bohrung 34, 34' verbindet, und eine radial innen liegende Fläche der Hülse 128, 128' sich mit einer radial außen liegenden Fläche des Bolzens 20 verbindet, der durch Presspassung in der Hülse 128, 128' eingepasst ist.

Das zweite Glied 14b, 14b' weist einen Kranz 150 auf, die sich radial nach innen in die Nut 140 erstreckt, die in der radial außen liegenden Fläche der Hülse 128, 128' ausgebildet ist, um das Halten des Steckmoduls 112 an seiner Position zu fördern. Ein Haltering 138 wirkt an der Kontaktfläche des Bolzens 20 und einer Schulter einer Nut 152, die in der radial innen liegenden Fläche der Hülse 128, 128' ausgebildet ist, um die Bauteile des Steckmoduls 112 zu halten.

Das Steckmodul 112 wird ausgebildet, bevor das Steckmodul 112 an den Gliedern 14a, 14a', 14b, 14b' angeordnet wird. Während der Ausbildung des Steckmoduls 112 wird der Bolzen 20 in die Buchse 18 eingeführt, und die Abstandsringe 32 werden in das Ende der Buchse 18 eingeführt. Die Enden des Bolzens 20 werden in die Hülsen 128, 128' eingeführt, derart, dass die Dichtungen 30, 30' zwischen den Hülsen 128, 128' und den Enden der Buchse 18 erfasst werden. Sodann werden die Halteringe 138 installiert.

Nach dem Ausbilden des Steckmoduls 112 wird das Steckmodul 112 an den Gliedern 14a, 14a', 14b, 14b' angeordnet. Das Steckmodul 112 wird in die Bohrungen 19 der ersten Glieder 14a, 14a' und die Bohrungen 34, 34' der zweiten Glieder 14b, 14b' eingeführt, um eine Presspassung zwischen der Buchse 18 und den ersten Gliedern 14a, 14a' herzustellen, und eine Presspasssung zwischen den Hülsen 128, 128' und den zweiten Gliedern 14b, 14b' herzustellen. Insbesondere kann eins der zweiten Glieder 14b, 14b' entfernt oder in anderer Weise aus dem Weg genommen werden, um eine Behinderung durch seinen Kranz 150 zu verhindern, um so das Einführen des Steckmoduls 112 in die zwei ersten Glieder 14a, 14a' und das andere zweite Glied 14b, 14b' zu erleichtern, woraufhin das verbleibende zweite Glied 14b, 14b' auf die jeweilige Hülse 128, 128' gedrückt werden kann. Schmiermittel kann vor oder nach dem Anordnen des Steckmoduls 112 an den Gliedern 14a, 14a', 14b, 14b' in das Steckmodul 112 eingespritzt werden.

## Patentansprüche

1. Endlose Gleiskette (110), umfassend: ein erstes Glied (14a, 14a') und ein zweites Glied (14b, 14b'), und ein Steckmodul (12, 112), das das erste und zweite Glied (14a, 14a', 14b, 14b') derart miteinander verbindet, dass diese relativ zueinander drehbar sind wobei das Steckmodul (12, 112) Folgendes umfasst: einen Bolzen (20), eine Buchse (18), die zwischen dem ersten Glied (14a, 14a') und dem Bolzen (20) angeordnet ist, derart, dass die Buchse (18) an dem ersten Glied (14a, 14a') fixiert ist, und den Bolzen (20) aufnimmt, um eine relative Drehung zwischen der Buchse (18) und dem Bolzen (20) zu ermöglichen, eine Dichtung (30, 30'), und eine Hülse (128, 128'), die mit der Buchse (18) zusammenwirkt, um die Dichtung (30, 30') dazwischen zu erfassen, und die zwischen dem zweiten Glied (14b, 14b') und dem Bolzen (20) angeordnet ist, derart, dass sie an dem zweiten Glied (14b, 14b') und dem Bolzen (20) fixiert ist, wobei die Hülse (128, 128') gesondert von dem zweiten Glied (14b, 14b') vorgesehen ist, um das Steckmodul (12, 112) vor dem Anordnen des Steckmoduls (12, 112) an dem ersten und zweiten Glied (14a, 14a', 14b, 14b') während der Montage der Gleiskette (110) zu montieren, **dadurch gekennzeichnet, dass** eine außen liegende Stirnfläche der Hülse (128, 128') mit einer außen liegenden Stirnfläche des Bolzens planar abschließt und ein Haltering (138) an der Kontaktfläche des Bolzens (20) und einer Schulter einer Nut (152) wirkt, die in der radial innen liegenden Fläche der Hülse (128, 128') ausgebildet ist, um die Bauteile des Steckmoduls (12,112) zu halten.

2. Endlose Gleiskette (110) nach Anspruch 1, wobei das Steckmodul (12, 112) einen Abstandsring (32) umfasst, der zwischen der Hülse (128, 128') und der Buchse (18) angeordnet ist, um die Hülse (128, 128') und die Buchse (18) voneinander zu beabstanden.

3. Endlose Gleiskette (110) nach Anspruch 1 oder 2, wobei die Hülse (128, 128') eine Nut (140) umfasst, und das zweite Glied (14b, 14b') einen Kranz (150) umfasst, der sich in die Nut (140) hinein erstreckt.

4. Endlose Gleiskette (110) nach einem der Ansprüche 1 bis 3, umfassend einen Haltering (138), der als eine Kontaktfläche zwischen der Hülse (128, 128') und dem Bolzen (20) dient.

5. Endlose Gleiskette (110) nach einem der Ansprüche 1 bis 4, wobei die Hülse (128, 128') eine erste Hülse (128) ist, und die Dichtung eine erste Dichtung (30) ist, ferner umfassend ein drittes Glied (14a'), ein viertes Glied (14b'), eine zweite Dichtung (30'), und eine zweite Hülse (128'), wobei das dritte Glied (14a') an der Buchse (18) fixiert ist, die erste und zweite Hülse (128, 128') am Bolzen (20) an gegenüberliegenden Enden desselben angeordnet sind, die zweite Hülse (128') mit der Buchse (18) zusammenwirkt, um die zweite Dichtung (30') zwischen der zweiten Hülse (128') und der Buchse (18) zu erfassen, die zweite Hülse (128') zwischen dem vierten Glied (14b') und dem Bolzen (20) angeordnet ist, und auf diese Weise an dem vierten Glied (14b') und dem Bolzen (20) fixiert ist, und die zweite Hülse (128') gesondert von dem vierten Glied (14b') vorgesehen ist.

6. Endlose Gleiskette (10, 110) nach Anspruch 5, wobei die erste Hülse (128) in Presspassung in das zweite Glied (14b) eingepasst ist, und die zweite Hülse (128') in Presspassung in das vierte Glied (14b') eingepasst ist.

7. Steckmodul (12, 112) zur Benutzung als eine Verbindung zum Verbinden eines ersten und zweiten Glieds (14a, 14a', 14b, 14b') einer endlosen Gleiskette (110), um eine relative Drehung zwischen dem ersten und zweiten Glied (14a, 14a', 14b, 14b') zu ermöglichen, wobei das Steckmodul (12, 112) Folgendes umfasst: einen Bolzen (20), eine Buchse (18), die den Bolzen (20) derart aufnimmt, dass eine relative Drehung zwischen diesen möglich ist, wobei die Buchse (18) dazu ausgebildet ist, von dem ersten Glied (14a, 14a') aufgenommen zu werden, und auf diese Weise daran fixiert ist, eine Dichtung (30, 30'), und eine Hülse (128, 128'), die mit der Buchse (18) zusammenwirkt, um die Dichtung (30, 30') dazwischen zu erfassen, und den Bolzen (20) aufnimmt, und auf diese Weise daran fixiert ist, wobei die Hülse (128, 128') dazu ausgebildet ist, von dem zweiten Glied (14b, 14b') aufgenommen zu werden, derart, dass sie nach dem Ausbilden des Steckmoduls (12, 112) daran fixiert ist, **dadurch gekennzeichnet, dass** eine außen liegende Stirnfläche der Hülse (128, 128') mit einer außen liegenden Stirnfläche des Bolzens planar abschließt und ein Haltering (138) an der Kontaktfläche des Bolzens (20) und einer Schulter einer Nut (152) wirkt, die in der radial innen liegenden Fläche der Hülse (128, 128') ausgebildet ist, um die Bauteile des Steckmoduls (12, 112) zu halten.

8. Steckmodul (12, 120) nach Anspruch 7, wobei die Hülse (128, 128') eine Nut (140) umfasst, die in einer radial außen liegenden Fläche der Hülse (128, 128') ausgebildet ist.

9. Steckmodul (12, 120) nach Anspruch 7 oder 8, umfassend einen Haltering (138), der zwischen der Hülse (128, 128') und dem Bolzen (20) wirkt.

10. Steckmodul (12, 112) nach einem der Ansprüche 7 bis 9, wobei die Dichtung (30, 30') eine erste Dichtung (30) ist, und die Hülse (128, 128') eine erste Hülse (128) ist, ferner umfassend eine zweite Dichtung (30') und eine zweite Hülse (128'), wobei die Buchse (18) dazu ausgebildet ist, von einem dritten Glied (14a') aufgenommen zu werden, und auf diese Weise daran fixiert ist, wobei die erste und zweite Hülse (128, 128') an dem Bolzen (20) an gegenüberliegenden Enden desselben auf beiden Seiten der Buchse (18) in einem beabstandeten Verhältnis zu der Buchse (18) angeordnet sind, wobei die zweite Hülse (128') mit der Buchse (18) zusammenwirkt, um die zweite Dichtung (30') zwischen der zweiten Hülse (128') und der Buchse (18) zu erfassen, wobei die zweite Hülse (128') an dem Bolzen (20) fixiert ist, und dazu ausgebildet ist, von dem vierten Glied (14b') aufgenommen zu werden, derart, dass er nach dem Ausbilden des Steckmoduls (12, 112) daran fixiert ist.

## Claims

1. Endless crawler (110), comprising: a first link (14a, 14a') and a second link (14b, 14b'), and a cartridge (12, 112) which connects the first and second links (14a, 14a', 14b, 14b') to each other in such a manner that said links are rotatable relative to each other, wherein the cartridge (12, 112) comprises the following: a bolt (20), a bushing (18), which is arranged between the first link (14a, 14a') and the bolt (20) in such a manner that the bushing (18) is fixed on the first link (14a, 14a') and receives the bolt (20) in order to permit a relative rotation between the bushing (18) and the bolt (20), a seal (30, 30') and a sleeve (128, 128') which interacts with the bushing (18) in order to detect the seal (30, 30') in between and which is arranged between the second link (14b, 14b') and the bolt (20) in such a manner that said seal is fixed on the second link (14b, 14b') and the bolt (20), wherein the sleeve (128, 128') is provided separately from the second link (14b, 14b') in order to mount the cartridge (12, 112) before arranging the cartridge (12, 112) on the first and second links (14a, 14a', 14b, 14b') during the assembly of the crawler (110), **characterized in that** an outer end surface of the sleeve (128, 128') ends in a planar manner with an outer end surface of the bolt, and a retaining ring (138) acts on the contact surface of the bolt (20) and a shoulder of a groove (152) which is formed in the radially inner surface of the sleeve (128, 128') in order to retain the components of the cartridge (12, 112).

2. Endless crawler (110) according to Claim 1, wherein the cartridge (12, 112) comprises a spacer ring (32) which is arranged between the sleeve (128, 128') and the bushing (18) in order to space the sleeve (128, 128') and the bushing (18) from each other.

3. Endless crawler (110) according to Claim 1 or 2, wherein the sleeve (128, 128') comprises a groove (140), and the second link (14b, 14b') comprises a rim (150) which extends into the groove (140).

4. Endless crawler (110) according to one of Claims 1 to 3, comprising a retaining ring (138) which serves as a contact surfaces between the sleeve (128, 128') and the bolt (20).

5. Endless crawler (110) according to one of Claims 1 to 4, wherein the sleeve (128, 128') is a first sleeve (128), and the seal is a first seal (30), and furthermore comprising a third link (14a'), a fourth link (14b'), a second seal (30') and a second sleeve (128'), wherein the third link (14a') is fixed on the bushing (18), the first and second sleeves (128, 128') are arranged on the bolt (20) at opposite ends of same, the second sleeve (128') interacts with the bushing (18) in order to detect the second seal (30') between the second sleeve (128') and the bushing (18), the second sleeve (128') is arranged between the fourth link (14b') and the bolt (20) and is thereby fixed on the fourth link (14b') and the bolt (20), and the second sleeve (128') is provided separately from the fourth link (14b').

6. Endless crawler (110) according to Claim 5, wherein the first sleeve (128) is fitted into the second link (14b) in an interference fit, and the second sleeve (128') is fitted into the fourth link (14b') in an interference fit.

7. Cartridge (12, 112) for use as a connection for connecting a first and second link (14a, 14a', 14b, 14b') of an endless crawler (110) in order to permit a relative rotation between the first and second links (14a, 14a', 14b, 14b'), wherein the cartridge (12, 112) comprises the following: a bolt (20), a bushing (18) which receives the bolt (20) in such a manner that a relative rotation is possible therebetween, wherein the bushing (18) is designed to be accommodated by the first link (14a, 14a') and is thereby fixed thereon, a seal (30, 30') and a sleeve (128, 128') which interacts with the bushing (18) in order to detect the seal (30, 30') in between and receives the bolt (20) and is thereby fixed thereon, wherein the sleeve (128, 128') is designed to be accommodated by the second link (14b, 14b') in such a manner that said sleeve is fixed on the cartridge (12, 112) after the latter is formed, **characterized in that** an outer end surface of the sleeve (128, 128') ends in a planar manner with an outer end surface of the bolt, and a retaining ring (138) acts on the contact surface of the bolt (20) and a shoulder of a groove (152) which is formed in the radially inner surface of the sleeve (128, 128') in order to retain the components of the cartridge (12, 112).

8. Cartridge (12, 120) according to Claim 7, wherein the sleeve (128, 128') comprises a groove (140) which is formed in a radially outer surface of the sleeve (128, 128').

9. Cartridge (12, 120) according to Claim 7 or 8, comprising a retaining ring (138) which acts between the sleeve (128, 128') and the bolt (20).

10. Cartridge (12, 112) according to one of Claims 7 to 9, wherein the seal (30, 30') is a first seal (30), and the sleeve (128, 128') is a first sleeve (128), and furthermore comprising a second seal (30') and a second sleeve (128'), wherein the bushing (18) is designed to be accommodated by a third link (14a') and is thereby fixed thereon, wherein the first and second sleeves (128, 128') are arranged on the bolt (20) at opposite ends of same on both sides of the bushing (18) in a spaced relationship to the bushing (18), wherein the second sleeve (128') interacts with the bushing (18) in order to detect the second seal (30') between the second sleeve (128') and the bushing (18), wherein the second sleeve (128') is fixed on the bolt (20) and is designed to be accommodated by the fourth link (14b') in such a manner that said sleeve is fixed on the cartridge (12, 112) after the latter is formed.

## Revendications

1. Chenille sans fin (110), comprenant : un premier organe (14a, 14a') et un deuxième organe (14b, 14b'), et un module enfichable (12, 112) qui relie l'un à l'autre le premier et le deuxième organe (14a, 14a', 14b, 14b') de telle sorte que ceux-ci puissent tourner l'un par rapport à l'autre, le module enfichable (12, 112) comprenant : un boulon (20), une douille (18) qui est disposée entre le premier organe (14a, 14a') et le boulon (20), de telle sorte que la douille (18) soit fixée sur le premier organe (14a, 14a') et reçoive le boulon (20) afin de permettre une rotation relative entre la douille (18) et le boulon (20), un joint d'étanchéité (30, 30') et un manchon (128, 128') qui coopère avec la douille (18) afin de saisir entre eux le joint d'étanchéité (30, 30'), et qui est disposé entre le deuxième organe (14b, 14b') et le boulon (20), de telle sorte qu'il soit fixé sur le deuxième organe (14b, 14b') et le boulon (20), le manchon (128, 128') étant prévu séparément du deuxième organe (14b, 14b'), afin de monter le module enfichable (12, 112) avant de disposer le module enfichable (12, 112) sur le premier et le deuxième organe (14a, 14a', 14b, 14b') pendant le montage de la chenille (110), **caractérisée en ce qu'**une surface frontale du manchon (128, 128') située à l'extérieur se termine à plat avec une surface frontale du boulon située à l'extérieur et une bague de retenue (138) agit sur la surface de contact du boulon (20) et un épaulement d'une rainure (152) qui est réalisée dans la surface du manchon (128, 128') située radialement à l'intérieur, afin de retenir les composants du module enfichable (12, 112).

2. Chenille sans fin (110) selon la revendication 1, dans laquelle le module enfichable (12, 112) comprend une bague d'espacement (32) qui est disposée entre le manchon (128, 128') et la douille (18), afin d'espacer l'un de l'autre le manchon (128, 128') et la douille (18).

3. Chenille sans fin (110) selon la revendication 1 ou 2, dans laquelle le manchon (128, 128') comprend une rainure (140) et le deuxième organe (14b, 14b') comprend une couronne (150) qui s'étend à l'intérieur de la rainure (140).

4. Chenille sans fin (110) selon l'une quelconque des revendications 1 à 3, comprenant une bague de retenue (138) qui sert de surface de contact entre le manchon (128, 128') et le boulon (20).

5. Chenille sans fin (110) selon l'une quelconque des revendications 1 à 4, dans laquelle le manchon (128, 128') est un premier manchon (128), et le joint d'étanchéité est un premier joint d'étanchéité (30), comprenant en outre un troisième organe (14a'), un quatrième organe (14b'), un deuxième joint d'étanchéité (30'), et un deuxième manchon (128'), le troisième organe (14a') étant fixé sur la douille (18), le premier et le deuxième manchon (128, 128') étant disposés sur le boulon (20) au niveau d'extrémités opposées de celui-ci, le deuxième manchon (128') coopérant avec la douille (18) afin de saisir le deuxième joint d'étanchéité (30') entre le deuxième manchon (128') et la douille (18), le deuxième manchon (128') étant disposé entre le quatrième organe (14b') et le boulon (20), et de ce fait étant fixé sur le quatrième organe (14b') et le boulon (20), et le deuxième manchon (128') étant prévu séparément du quatrième organe (14b').

6. Chenille sans fin (10, 110) selon la revendication 5, dans laquelle le premier manchon (128) est ajusté par ajustement serré dans le deuxième organe (14b), et le deuxième manchon (128') est ajusté par ajustement serré dans le quatrième organe (14b').

7. Module enfichable (12, 112) pour l'utilisation en tant que connexion pour connecter un premier et un deuxième organe (14a, 14a', 14b, 14b') d'une chenille sans fin (110), afin de permettre une rotation relative entre le premier et le deuxième organe (14a, 14a', 14b, 14b'), le module enfichable (12, 112) comprenant : un boulon (20), une douille (18) qui reçoit le boulon (20) de telle sorte qu'une rotation relative entre ceux-ci soit possible, la douille (18) étant réalisée de manière à être reçue par le premier organe (14a, 14a'), et est fixée sur celui-ci de cette manière, un joint d'étanchéité (30, 30'), et un manchon (128, 128') qui coopère avec la douille (18) afin de saisir entre eux le joint d'étanchéité (30, 30') et qui reçoit le boulon (20), et est fixé sur celui-ci de cette manière, le manchon (128, 128') étant réalisé pour être reçu par le deuxième organe (14b, 14b') de telle sorte qu'il soit foxé sur celui-ci après la réalisation du module enfichable (12, 112), **caractérisé en ce qu'**une surface frontale du manchon (128, 128') située à l'extérieur se termine à plat avec une surface frontale du boulon située à l'extérieur et une bague de retenue (138) agit sur la surface de contact du boulon (20) et un épaulement d'une rainure (152) qui est réalisée dans la surface du manchon (128, 128') située radialement à l'intérieur, afin de retenir les composants du module enfichable (12, 112).

8. Module enfichable (12, 120) selon la revendication 7, dans lequel le manchon (128, 128') comprend une rainure (140) qui est réalisée dans une surface du manchon (128, 128') située radialement à l'extérieur.

9. Module enfichable (12, 120) selon la revendication 7 ou 8, comprenant une bague de retenue (138) qui agit entre le manchon (128, 128') et le boulon (20).

10. Module enfichable (12, 120) selon l'une quelconque des revendications 7 à 9, dans lequel le joint d'étanchéité (30, 30') est un premier joint d'étanchéité (30) et le manchon (128, 128') est un premier manchon (128) comprenant en outre un deuxième joint d'étanchéité (30') et un deuxième manchon (128'), la douille (18) étant réalisée pour être reçue par un troisième organe (14a'), et est fixée de cette manière sur celui-ci, le premier et le deuxième manchon (128, 128') étant disposés sur le boulon (20) au niveau d'extrémités opposées de celui-ci, des deux côtés de la douille (18) à distance de la douille (18), le deuxième manchon (128') coopérant avec la douille (18) afin de saisir le deuxième joint d'étanchéité (30') entre le deuxième manchon (128') et la douille (18), le deuxième manchon (128') étant fixé sur le boulon (20) et étant réalisé pour être reçu par le quatrième organe (14b') de telle sorte qu'il soit fixé sur celui-ci après la réalisation du module enfichable (12, 112).
